# EUROPEAN PATENT APPLICATION

(11) **EP 4 468 220 A1**
(43) Date of publication of application: **27.11.2024**
(21) Application number: 23175614.9
(22) Date of filing: 26.05.2023
(51) Int. Cl.: G06Q 10/0635, G06Q 50/08, G06Q 10/20

(54) **COMPUTER-IMPLEMENTED METHOD FOR THE MANAGEMENT OF THE STRUCTURAL RISK OF INFRASTRUCTURES CONDITIONED BY WEATHER-CLIMATE EVENTS**

(71) Applicant: Ets s.r.l., 00183 Roma (IT)
(72) Inventor: FORIA, Federico, 00183 ROMA (IT); MICELI, Gabriele, 00183 ROMA (IT); SKRYNYK, Oleg, 43480 Vila-seca (ES); BOQUÈ, Anna, 43480 Vila-seca (ES); CIMOLAI, Caterina, 43480 Vila-seca (ES); AGUILAR, Enrico, 43480 Vila-seca (ES); OLANO, Jon, 43480 Vila-seca (ES)
(74) Representative: Luppi, Emanuele

(57) **Abstract**

The computer-implemented method comprises the following phases:
- acquisition of a first set of data relating to the structural characteristics of an infrastructure, the data of the first set being selected from the list comprising: type of the infrastructure, size of the infrastructure, physical-mechanical characteristics of the structural elements constituting the infrastructure, materials of construction;
- acquisition of a second set of data relating to the hydro-geological characteristics of the construction site of the infrastructure, the data of the second set being selected from the list comprising: geographical location, geographical peculiarities of the construction site, hydro-geological characteristics of the construction site;
- acquisition of a third set of data relating to the climatic characteristics of the geographic area of construction of the infrastructure, the data of the third set of data being selected from the list comprising: type of precipitation and relevant frequency, temperature, wind, light radiation.
- computing of a risk index of the infrastructure, carried out depending on the first set of data, the second set of data and the third set of data;
- mapping of the infrastructure depending on the risk index of the infrastructure.

## Description

### Technical Field

The present invention relates to a computer-implemented method for the management of the structural risk of infrastructure conditioned by weather-climate events.

### Background Art

All types of mobility and transportation of people, goods and resources are essential elements of contemporary society.

Consequently, the infrastructures making this flow possible have enormous social value and managing their risks is essential for mobility to remain efficient and safe.

Despite this, the adverse effects relating to climate change are not taken into consideration in the analysis of risks of infrastructure.

Currently, the impact relating to climate change is becoming more and more evident, making it necessary to consider it as a possible risk factor for infrastructure and the flow of people and goods moving through it. In general, it is essential to appreciate how future weather/climate conditions may positively or negatively affect infrastructure.

Current regulations on the safety of transportation infrastructure suggest guidelines for defining the class of attention for each type of transportation infrastructure elements (bridge, tunnel, station, etc.). Attention classes can be used as a criterion for prioritizing maintenance jobs on the elements themselves. The class of attention is an approximate estimate of the risk factors, which is useful for prioritizing further investigations/checks/controls as well as for scheduling the necessary maintenance and structural interventions.

The definition of the class of attention involves a selection of relevant physical parameters by type of infrastructure, e.g., of the hydraulic, structural/infrastructure, seismic, geotechnical, geological type.

These parameters are then processed and analyzed according to the specific guidelines of the Ministry of Infrastructure by each type of civil works, classified according to ranges of values applied to the parameters and/or the combination thereof, to obtain the class of attention of the infrastructure element.

This known method is very simple, requires low computational cost and is widely applicable.

However, for some types of works, a sustainability report containing the calculation of risk with reference to climate change is required and, at the regulatory level, the methods and indices for calculating the risk resulting from climate change have critical issues.

In particular, the methods and indices for the calculation of the risk resulting from climate change are not uniquely defined and are generally the subject of dedicated engineering studies. This means that they do not have systematic and repeatable characteristics.

In fact, the known methods simply do not consider the possible future state. In detail, the guidelines do not offer guidance regarding relevant data, calculation models, process to be applied, etc., for the calculation of the future level of attention. More precisely, the classes of attention refer to "static" considerations and processes, i.e., not updated with respect to current and/or future climate conditions.

In addition, the known methods are generally carried out on local works and are not suitable for defining the classes of attention of extensive lines which run along geographic areas having different geo-morphological characteristics.

So much so that the result of known methods turns out to be, precisely, a class of attention and not of risk. In other words, decision support is less accurate, especially in cases of the greatest interest where the level of attention turns out to be high and more in-depth analyses are required which, as a result, produce a risk value.

Another worthwhile aspect of consideration lies in the fact that in order to carry out the assessment of the level of attention of all the works on a line, it is necessary to proceed with countless surveys and corresponding data processing. This allows a definition and comparison of the class of attention on the whole line and the possibility of assigning priority levels of interventions for the areas most at risk.

However, the need to acquire and process data for each element of the infrastructure requires current instrumental data, acquired through known instrumental appliances, and historical data regarding impacting events over a recent time interval, generally spread in documents belonging to different entities, which results in an expensive and complicated operation, and above all, requires considerably extended timelines.

### Description of the Invention

The main aim of the present invention is to devise a computer-implemented method for the management of the structural risk of infrastructures which allows processing an infrastructure risk index which takes into account possible future climate scenarios.

Another object of the present invention is to devise a computer-implemented method for the management of the structural risk of infrastructures which requires a low computational burden while achieving an accurate and reliable result.

A further object of the present invention is to devise a computer-implemented method for the management of the structural risk of infrastructures which provides for quick and timely processing timelines.

Still one object of the present invention is to devise a computer-implemented method for the management of the structural risk of infrastructures which allows the aforementioned drawbacks of the prior art to be overcome within the framework of a simple, rational, easy and effective to use as well as affordable solution.

### Embodiments of the Invention

Other characteristics and advantages of the present invention will become more apparent from the description of a preferred, but not exclusive, embodiment of a computer-implemented method for the management of the structural risk of infrastructures.

This method is carried out by means of the use of a computer and, in particular, of special software through which the following phases are carried out.

The method according to the invention first comprises a phase of acquisition of a first set of data relating to the structural characteristics of an infrastructure.

In detail, the data belonging to the first set are selected from the list comprising but not limited to: type of infrastructure, size of infrastructure, physical-mechanical characteristics of the structural elements constituting the infrastructure, materials of construction.

The acquisition of the first set of data is aimed at detecting the structural peculiarities and construction risks peculiar to an infrastructure regardless of external factors, such as e.g. the maximum possible distance between two spans of a bridge, the strength and wear time of usable construction materials, etc. The method also comprises a phase of acquisition of a second set of data relating to the hydro-geological characteristics of the construction site of the infrastructure.

The data belonging to the second set are selected from the list comprising but not limited to: geographical location, geographical peculiarities of the construction site, hydro-geological characteristics of the construction site.

In actual facts, the second set of data relates to the type of land on which the infrastructure is built and takes into account possible interfering factors, such as e.g. the proximity to the sea resulting in saltiness and high rate of humidity, proximity to waterways with the possibility of their overflowing, mountain location with risk of landslides or avalanches, etc.

Finally, the method comprises a phase of acquisition of a third set of data relating to the climatic characteristics of the geographic area where the infrastructure is to be built.

Specifically, the data belonging to the third set are selected from the list comprising but not limited to: type of precipitation and relevant frequency, temperature, wind, light radiation.

The third set of data relates to the trends in climate variations for the geographic area of interest. Through the third set of data, it is possible to assess a future climate scenario and how it may impact the structural safety of the infrastructure, as will be better described later in this disclosure.

Next, the method involves a phase of calculating an infrastructure risk index carried out according to the first set of data, the second set of data and the third set of data.

In actual facts, the infrastructure risk index calculated by means of this method is able to assess the structural safety of an infrastructure not only on the basis of the inherent characteristics of the infrastructure itself and of the hydro-geological characteristics of the construction site but also of the influence that climatic variations may have thereon.

Finally, the method comprises a phase of mapping the infrastructure depending on the infrastructure risk index.

The phase of mapping allows a user to visually show the parts of the infrastructure which are most at risk and, therefore, which require timely intervention.

The infrastructure comprises one or more structural elements, each having respective constant structural characteristics. The structural elements are selected from the list comprising but not limited to: linear and/or point portion, bridge, station, tunnel.

Conveniently, the phase of acquisition of the first set of data comprises a step of dividing the data depending on the type of structural element to obtain the relevant first sets of data.

In actual facts, each type of structural element has specific data on its structural characteristics which are grouped together.

Similarly, the construction site also comprises one or more construction areas, each having relevant constant hydro-geological characteristics.

Specifically, the construction areas are selected from the list comprising but not limited to: flat, mountain, maritime, rocky soil, sandy soil, clay soil, with the presence of watercourses, with the presence of buildings/other infrastructure, with the presence of forested areas, watersheds.

Advantageously, the phase of acquisition of the second set of data comprises a step of dividing the data depending on the construction areas to obtain the relevant second sets of data.

Each construction area has specific data relating to its own hydro-geological characteristics which, again in this case, are grouped together.

Conveniently, the phase of acquisition of the third set of data is carried out by collecting the meteorological data relating to the geographic construction area over a predefined time interval.

After the data have been acquired, the infrastructure risk index is calculated. The computational phase conveniently comprises a first step of computing a structural risk index depending on the first set of data and on the third set of data.

In actual facts, the first step of computing allows the third set of data to be correlated with the first set of data and thus to determine how climate variations can affect the structural characteristics of the infrastructure.

Specifically, the first step of computing is carried out by correlating the third set of data with the first set of data to get relevant sub-indices of structural risk. In this way, it is possible to determine how climatic variations can affect the structural characteristics of the individual structural elements of the infrastructure.

The computational phase also comprises a second step of computing a weather-climate risk index depending on the second set of data and on the third set of data.

In actual facts, the second step of computing allows the third set of data to be correlated with the second set of data and thus to determine how climatic variations can affect the hydro-geological characteristics of the construction site. Specifically, the second step of computing is carried out by correlating the third set of data with the second set of data to get relevant sub-indices of weather-climate risk. In this way, it is possible to determine how climatic variations can affect the hydro-geological characteristics of the individual construction areas of the construction site.

Finally, the computational phase comprises a step of combining the structural risk index and the weather-climate risk index to get the infrastructure risk index. In detail, the step of combining is carried out by combining the structural risk sub-indices and the weather-climate risk sub-indices to obtain corresponding infrastructure risk sub-indices.

As stated above, the phase of acquisition of the third set of data is carried out depending on a predefined time interval.

In accordance with a preferred embodiment, the method comprises the repetition of the phase of acquisition of the third set of data depending on at least one different time interval to obtain a new third set of data.

The computational phase is then repeated depending on the new third set of data.

Thus, this method makes it possible to calculate a new infrastructure risk index depending on new climate data. In this way, the infrastructure risk index is always up-to-date and very reliable.

In addition to this, again with reference to the preferred embodiment, the method also comprises a phase of processing a set of future data predicted for a future time interval starting from the third set of data.

Conveniently, the computational phase is also carried out depending on the set of future data.

The processing phase allows hypothetical climate data based on a future time interval to be generated, and based on these, the computational phase allows an infrastructure risk index to be obtained which takes into account possible future climate variations.

Finally, as previously mentioned, the method involves the infrastructure mapping phase depending on the infrastructure risk index.

In detail, the mapping phase comprises a step of assigning infrastructure risk sub-indices to each structural element. By doing so, it is possible to prioritize interventions for the individual structural elements, thus optimizing maintenance interventions.

Depending on the preferred embodiment, the phase of mapping is carried out by means of chromatic subdivision of a plan of the infrastructure in the geographical area of construction.

It is therefore possible to assign different colors to the structural elements of the infrastructure depending on the relevant risk sub-index, thus making their assignment very intuitive and straightforward.

It has in practice been ascertained that the present invention enables the resolution of the intended objects and, in particular, the fact is emphasized that the present method enables the processing of a risk index of an infrastructure which takes into account possible future climate scenarios incident to the infrastructure itself and/or to the neighboring territory.

Another object of the present invention is to devise a computer-implemented method for the structural monitoring of infrastructures which requires a low computational burden while achieving an accurate and reliable result.

A further object of the present invention is to devise a computer-implemented method for the structural monitoring of infrastructure which provides fast and timely processing timelines.

## Claims

1. Computer-implemented method for the management of the structural risk of infrastructures **characterized by** the fact that it comprises the following phases:
- acquisition of a first set of data relating to the structural characteristics of an infrastructure, the data of said first set being selected from the list comprising: type of the infrastructure, size of the infrastructure, physical-mechanical characteristics of the structural elements constituting the infrastructure, materials of construction;
- acquisition of a second set of data relating to the hydro-geological characteristics of the construction site of said infrastructure, the data of said second set being selected from the list comprising: geographical location, geographical peculiarities of the construction site, hydro-geological characteristics of the construction site;
- acquisition of a third set of data relating to the climatic characteristics of the geographic area of construction of said infrastructure, the data of said third set of data being selected from the list comprising: type of precipitation and relevant frequency, temperature, wind, light radiation.
- computing of a risk index of said infrastructure, carried out depending on said first set of data, said second set of data and said third set of data;
- mapping of said infrastructure depending on said infrastructure risk index.

2. Method according to claim 1, **characterized by** the fact that said infrastructure comprises one or more structural elements, each having respective constant structural characteristics, said phase of acquisition of the first set of data comprising a step of dividing said data depending on the type of structural element to obtain first sets of data.

3. Method according to one or more of the preceding claims, **characterized by** the fact that said structural elements are selected from the list comprising: linear and/or point portion, bridge, station, tunnel.

4. Method according to one or more of the preceding claims, **characterized by** the fact that said construction site comprises one or more construction areas, each having relevant constant hydro-geological characteristics, said phase of acquisition of the second set of data comprising a step of dividing said data depending on said construction areas.

5. Method according to one or more of the preceding claims, **characterized by** the fact that said construction areas are selected from the list comprising: flat, mountain, maritime, rocky soil, sandy soil, clay soil, with the presence of watercourses, with the presence of buildings/other infrastructure, with the presence of forested areas.

6. Method according to one or more of the preceding claims, **characterized by** the fact that said computational phase comprises a first step of computing a structural risk index depending on said first set of data and on said third set of data.

7. Method according to one or more of the preceding claims, **characterized by** the fact that said computational phase comprises a second step of computing a weather-climate risk index depending on said second set of data and on said third set of data.

8. Method according to one or more of the preceding claims, **characterized by** the fact that said computational phase comprises a step of combining said structural risk index and said weather-climate risk index to obtain said infrastructure risk index.

9. Method according to one or more of the preceding claims, **characterized by** the fact that said phase of acquisition of the third set of data is carried out by means of the collection of meteorological data relating to said geographic construction area over a predefined time interval.

10. Method according to one or more of the preceding claims, **characterized by** the fact that it comprises the repetition of said phase of acquisition of the third set of data depending on at least one different time interval to obtain a new third set of data and by the fact that said computational phase is repeated depending on said new third set of data.

11. Method according to one or more of the preceding claims, **characterized by** the fact that it comprises a phase of processing a set of future data predicted for a future time interval starting from said third set of data and by the fact that said computational phase is carried out also depending on said set of future data.

12. Method according to one or more of the preceding claims, **characterized by** the fact that said phase of mapping is carried out by means of chromatic subdivision of a plan of said infrastructure in said geographical area of construction.
